(19)

Europäisches Patentamt
European Patent Office
Office européen des brevets

(11) **EP 4 202 317 A1**

(12) **EUROPEAN PATENT APPLICATION**

(43) Date of publication:
**28.06.2023 Bulletin 2023/26**

(21) Application number: **21306871.1**

(22) Date of filing: **21.12.2021**

(51) International Patent Classification (IPC):
**F24S 90/00** (2018.01)

(52) Cooperative Patent Classification (CPC):
**F24S 90/00;** F24S 2201/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TotalEnergies OneTech 92400 Courbevoie (FR)**

(72) Inventors:
• **DELAHAYE, Bruno EGLY (FR)**

• **LEVITT, David BIZANOS (FR)**
• **Gloanec, Franck Puteaux (FR)**
• **Belot, Christophe BAYONNE (FR)**
• **Susbielle, Julie CAMBO LES BAINS (FR)**

(74) Representative: **Bandpay & Greuter 30, rue Notre-Dame des Victoires 75002 Paris (FR)**

(54) **ASSESSING PERFORMANCE OF A SITE COMPRISING A SOLAR FIELD SYSTEM**

(57)     The disclosure notably relates to a computer-implemented method for assessing performance of a site comprising a solar field system. The solar field system includes solar panels and is configured for providing heat. The method comprises providing a heating requirement for the solar field system. The method comprises providing one or more sets of inputs. Each set of inputs includes meteorological data, panel features for one or more solar panel types, and site data. The method comprises computing automatically, for each set of inputs, by a computer system and based on the set of inputs, output data including a respective quantification of a carbon footprint of the site, and/or a number and/or type of panels to meet the heating requirement. The method allows objectively assessing performance of the site comprising the solar field system.

FIG. 1

EP 4 202 317 A1

## Description

### TECHNICAL FIELD

The disclosure relates to the field of computer programs and systems, and more specifically to a method, system and program for assessing performance of a site comprising a solar field system.

### BACKGROUND

The demand for renewable energy is constantly increasing these days. In particular, more and more sites comprise a solar field system for producing renewable energy or would like to equip themselves with such a system. Such systems use solar energy to provide domestic hot water or space heating. However, it is important to study the relevance of such a solar field system with respect to technical constraints beforehand. Moreover, the sizing of such a solar field system according to the technical characteristics of the site can make it possible to optimize its operation.

Within this context, there is still a need for an improved method for assessing performance of a site comprising a solar field system.

### SUMMARY

It is therefore provided a computer-implemented method for assessing performance of a site comprising a solar field system. The solar field system includes solar panels and is configured for providing heat. The method comprises providing a heating requirement for the solar field system. The method comprises providing one or more sets of inputs. Each set of inputs includes meteorological data, panel features for one or more solar panel types, and site data. The method comprises computing automatically, for each set of inputs, by a computer system and based on the set of inputs, output data including a respective quantification of a carbon footprint of the site, and/or a number and/or type of panels to meet the heating requirement.

The method may comprise one or more of the following:

- the site may further comprise a thermal storage and a gas heater. The computation of the output data may comprises:

  ○ calculating the number of panels of the solar field system;
  ○ calculating a solar field power production over a period; and
  ○ simulating an energy management of the solar field system, the thermal storage and the gas heater,

- the panel features may include a solar Keymark equation. The calculation of the number of panels may comprise:

  ○ calculating irradiance data for a day of the year based on the meteorological data;
  ○ calculating a power production of one panel based on the calculated irradiance data and the solar Keymark equation; and
  ○ calculating the number of panels based on the power production of one panel and the heating requirement,

- the calculation of the solar field power production over the period may comprise:

  ○ discretizing the period into a set of time intervals; and
  ○ for each time interval, calculating a power production and an outlet temperature provided by the solar field system based on the solar Keymark equation, the calculated number of panels and a solar field flow rate,

- the solar field power production may be configured to provide a constant outlet temperature. The calculation of the solar field power production may further comprise, for each time interval of the set:

  ○ correcting the flow rate such that the calculated outlet temperature provided by the solar field system corresponds to the constant outlet temperature,

- the simulation of the energy management may comprise determining a thermal power of the gas heater based on the solar field flow rate and the calculated outlet temperature,
- the simulation of the energy management may comprises determining a power loading of the thermal storage based on the heating requirement, the calculated solar field power production, the determined thermal power of the gas heater and a remaining thermal storage,

- the computation of the output data may further comprise setting a panel tilt angle. The setting of the panel tilt angle may comprise:

  ◦ determining a set of panel tilt angles;
  ◦ computing an annual efficiency for each panel tilt angle of the set; and
  ◦ selecting the panel tilt angle of the set that maximizes the computed annual efficiency; and
  ◦ optionally, setting a panel azimuth,

- the site may further comprises a circulation pump. The computation of the output data may further comprise:

  ◦ calculating a pressure drop in the solar field system, the pressure drop comprising a main distributor pressure drop, a module pressure drop and a main collector pressure drop;
  ◦ calculating a power consumption of the circulation pump based on the calculated pressure drop, and/or

- the provision of the one or more sets of inputs may comprise:

  ◦ selecting a solar panel technology from a set of solar panel technologies, the set of solar panel technologies optionally including at least one fixed panel technology and/or at least one panel technology based on a tracking system;
  ◦ selecting one or more manufacturers of the selected solar panel technology; and
  ◦ automatically importing from a database the panel features according to the selected one or more manufacturers.

It is further provided a computer program comprising instructions for performing the method for assessing performance of a site comprising a solar field system, the method for upgrading a real-world site and/or the method for designing a site comprising a solar field system.

It is further provided a device comprising a data storage medium having recorded thereon the computer program.

The device may form or serve as a non-transitory computer-readable medium, for example on a SaaS (Software as a service) or another server, or a cloud-based platform, or the like. The device may alternatively comprise a processor coupled to the data storage medium. The device may thus form a computer system in whole or in part (e.g., the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG. 1 shows schematically an example of a site comprising a solar field system;
- FIG. 2 shows an example of a flowchart of the performance assessing method;
- FIG. 3 shows an example of the calculation of the number of panels of the solar field system;
- FIG. 4 a first example of the calculation of the solar field power production in a constant solar field flowrate regulation mode;
- FIG. 5 shows a second example of the calculation of the solar field power production in a constant temperature regulation mode;
- FIG. 6 shows an example of the setting of the panel tilt angle;
- FIG. 7 illustrates an example of the optimization of the panel tilt angle based on maximization of solar filed annual efficiency GTI;
- FIG. 8 shows an example of decision tree for determining the thermal power of the gas heater;
- FIG. 9 shows an example of decision tree for determining the power loading of the thermal storage;
- FIG. 10 shows an example of decision tree for determining a non-valuated energy;
- FIG. 11 shows schematically an example of the solar field system;
- FIG. 12 shows an example of calculation of the pressure drop and circulation pump power consumption;
- FIG. 13 shows four examples of graphs representing output data;
- FIG. 14 shows tables related to an example of sets of inputs and computed output data; and
- FIG. 15 shows an example of the system.

**DETAILED DESCRIPTION**

It is therefore provided a computer-implemented method for assessing performance of a site comprising a solar field system. The solar field system includes solar panels and is configured for providing heat. The method comprises providing a heating requirement for the solar field system. The method comprises providing one or more sets of inputs. Each set of inputs includes meteorological data, panel features for one or more solar panel types, and site data. The method comprises computing automatically, for each set of inputs, by a computer system and based on the set of inputs, output data including a respective quantification of a carbon footprint of the site, and/or a number and/or type of panels to meet the heating requirement. The method may be referred to as "the performance assessing method". The method constitutes an improved method for assessing performance of a site comprising a solar field system.

Notably, the method allows objectively assessing performance of the site comprising the solar field system. Indeed, the method computes, for each set of inputs, a respective quantification of the carbon footprint of the site and/or a sizing of the solar field system to meet the heating requirement (including a number and/or type of panels). Each set of inputs comprises objective information about the weather conditions of the site (e.g., the temperature and/or the solar irradiance), about panel features for one or more solar panel types (e.g., power production) and about the site (e.g., operating parameters such as inlet and outlet temperatures and/or regulation mode). The method computes the performance of the site based on these objective inputs, and thereby yields an objective quantification of the carbon footprint and/or sizing of the solar field system. This objective quantification of the performance of the site allows, e.g., in combination with a net technical cost, to take objective decisions with respect to a real-world site, such as upgrading the solar field system of a real-world site or designing a solar field system of a site that may be later built in the real-world.

Furthermore, the computation of the performance of the site is carried out automatically by a computer system. This allows for a deterministic and accurate computation of the carbon footprint quantification and/or sizing of the solar field system, e.g., as opposed to ground-truth based estimations. Furthermore, this allows a user, e.g., an engineer or a designer of the site, to obtain the performance of the site without tedious efforts: the user provides the inputs, and the computer automatically computes the carbon footprint quantification and/or the sizing of the solar field system. This makes the method ergonomic.

The one or more sets of inputs may consist in several sets of inputs, i.e., the method may be repeated for several sets of inputs, i.e. executed several times each time for a different set of inputs. The method may for example be automatically iterated for several sets of inputs with various panel types and/or inlet and outlet temperatures, the method determining its output(s) automatically for all the sets of inputs. The method may thereby assess the carbon footprint and/or size the solar field system for various configurations of the site and/or various production demands, i.e., each corresponding to a different set of inputs, and compare these various configurations one to another. This allows to determine an optimal configuration and/or to take objective decisions with respect to the site. The method may thereby be used in a method for upgrading the solar field system of a site, and/or in a method for designing a site comprising a solar field system.

It is notably provided a computer implemented method for upgrading a real-world site. The method for upgrading the real-world site may be referred to as "the site upgrading method". The site upgrading method comprises performing the performance assessing method, wherein the one or more sets of inputs consist in several sets of inputs, thereby computing respective quantifications of the carbon footprint of the site each for a respective set of inputs. These respective quantifications correspond to various configurations of the site (e.g., various types of solar panels and/or various operating parameters of the site). The site upgrading method comprises determining, based on each computed respective quantification of the carbon footprint and/or on each number and/or type of panels to meet the heating requirement, one or more solar panels to be integrated on a solar field system of the site and/or an improvement of one or more existing solar panels of the solar field system.

The site upgrading method uses the results of the performance assessing method to upgrade a real-world site, i.e., a site which already exists in the real-world (also referred to as "brownfield" construction project), based on estimated carbon footprints and/or the solar field system as sized using the performance assessing method. For instance, the method may determine the set of inputs among the sets that optimizes the operation of the site, e.g., with respect to the computed carbon footprint.

The site upgrading method may notably use the results of the performance assessing method to determine one or more solar panels to be integrated on a solar field system of the site. For instance, the site may not currently comprise a solar field system, and the site upgrading method may determine the solar field system to be installed on the site. In that case, the site upgrading method may determine the number and/or type of panels of the solar field system to be installed on the site and assess the quantification of the carbon footprint of the site after the installation. Alternatively, a solar field system may already exist in the site, and the site upgrading method may determine one or more solar panels to be integrated on the existing solar field system of the site and/or an improvement of one or more existing solar panels of the solar field system. For instance, the one or more solar panels to be integrated may be one or more additional solar panels to be integrated on the existing solar field system, e.g., because the current number of solar panels of the existing solar field system is lower than the computed number of solar panels. The improvement of the one or more existing solar panels may, e.g., consist in replacing the one or more existing solar panels (e.g., all) with one or more solar panels of another type.

The site upgrading method may then, physically in the site, comprise the integration the determined one or more solar panels on the solar field system. For example, the site upgrading method may comprise accessing, by a user, the results of the performance assessing method. The site upgrading method may then comprise the user, based on the determined quantification of carbon footprint (e.g. for several sets of inputs), selecting, in accordance with a set of inputs for which the site carbon footprint is sufficiently (e.g. optimally, e.g. also with respect to a net technical cost) reduced and/or optimal (e.g. also with respect to a net technical cost), a number and a type of solar panels to be integrated on the site. The site upgrading method may then comprise (e.g., by the same user and/or by one or more other users, e.g., engineers and/or workers), physically in the site, equipping the selected number of solar panels of the selected type.

Alternatively, the site upgrading method may use the results of the performance assessing method to determine an improvement of one or more existing solar panels of the solar field system, e.g., a change of type and/or sizing of these existing solar panels, and may then physically in the site, comprise the performing of this improvement. The improvement may comprise adding or removing one or more existing solar panels and/or changing one or more existing solar panels by one or more other solar panels. For example, the site upgrading method may comprise accessing, by a user, the results of the performance assessing method. The site upgrading method may then comprise by the user, based on the determined quantification of carbon footprint (e.g. for several sets of inputs), selecting, in accordance with a set of inputs for which the site carbon footprint is sufficiently (e.g. optimally, e.g. also with respect to a net technical cost) reduced and/or optimal (e.g. also with respect to a net technical cost), a number and/or a type of solar panels for the site to be equipped. The site upgrading method may then comprise (e.g., by the same user and/or by one or more other users, e.g. engineers and/or workers), physically in the site, improving the current solar field system, by performing one or more of: adding one or more new solar panels, removing one or more existing solar panels, and/or replacing one or more existing solar panels with one or more solar panels of another type.

It is also provided a computer-implemented method for designing a site comprising a solar field system. The method for designing the site comprises performing the method for assessing performance of the site, wherein the one or more sets of inputs consist in several sets of inputs, thereby computing respective quantifications of the carbon footprint of the site, and/or a number and/or type of panels to meet the heating requirement each for a respective set of inputs. The method for designing the site further comprises determining, based on each computed respective quantification and/or on each number and/or type of panels, a number and/or a type of solar panels for the solar field system. The method for designing the site may be referred to as "the design method".

The design method uses the results of the performance assessing method to design a site comprising a solar field system, i.e., that may be later built further to the completion of the design. The site may be existing or not (i.e., already built or not). If the site is not existing, the design may comprise designing the site as well as the solar filed system in a same time (also referred to as "greenfield" construction project). Otherwise, the design may comprise designing a solar filed system for an existing site (also referred to as "brownfield" construction project). The design involves the determination of the solar field system of the site, i.e., the number and/or the type of solar panels of the solar field system, based on the results of the performance assessing method and on the net technical cost. This determination may be automatic, e.g., to optimize the number and/or the type of solar panels for maximizing $CO_2$ savings with net technical cost constraints. Alternatively, this determination may involve a user, e.g., an engineer or a designer, performing this determination, e.g., based on the results of the performance assessing method, on technical specificities or constraints of the site and/or on the net technical cost. For example, the determination may comprise a user selecting a number and/or a type of solar panels (e.g., the same for all solar panels or different types for different panels) for the solar field system providing optimal, or at least efficient, $CO_2$ savings with respect to the net technical cost. The design method may thus use the results of the performance assessing method to guide a user, e.g., an engineer or a designer, in the design of the real-world site. The design method allows a user to design the site, by choosing the number and/or the type of solar panels of the solar field system with the constraint of the net technical cost.

The net technical cost is an indicator of the efficiency of investment of the site. It captures a cost of material and in manufacturing, conception and/or installation of the solar field system. The net technical cost allows to avoid oversizing (which could lead to overproduction), i.e., to avoid increasing the size of solar field system in such a manner that the global efficiency of the site to save $CO_2$ decreases. This cost captures the fact that only a limited amount of material and/or space may be available to maximize $CO_2$ savings. For example, $CO_2$ savings cannot in practice be maximized by always increasing the number of panels in the solar field system, because it is in practice impossible to add an unlimited number of solar panels, due to space and/or material constraints. For instance, the size of the available roof (or of any sunlight space) may limit the size of the solar field system. Thus, the number of solar panels that may be installed can be limited by architectural constraints of the site. On the other hand, the installation of an oversized solar field system can be inefficient in terms of $CO_2$ savings, because of the losses generated by the storage, for example for the sunniest days for which the production would be higher than the real need. The design method thus allows to balance CO2 savings with the material/technical cost necessary to obtain these savings. The net technical cost may be equal to the cost of the solar field system minus all the benefits (e.g., the amount of energy savings and/or Capex and Opex reduction) divided by the amount of CO2 savings. The net technical cost may take into account a net present value. The net present value may be calculated based on a sum of annual cashflow per year (e.g., taking into account of an inflation rate, a discount rate and a solar thermal system lifetime) minus an invested capital.

The design method further comprises determining, based on each computed respective quantification of the carbon footprint of the site and/or on each number and/or type of panels and on a net technical cost, a number and/or a type of solar panels for the solar field system. For instance, the one or more sets of inputs may consist in several sets and the user may select the set of inputs among the sets which, e.g., represents an optimal balance between CO2 savings and the net technical cost. Alternatively, the determining of the number and/or the type of solar panels for the solar field system may comprise automatically by a computer system, selecting, based on each computed respective quantification of the carbon footprint of the site and/or on each number and/or type of panels and on a net technical cost and on a criterion of maximization of CO2 savings, an optimal configuration for the solar field system (i.e., a number and/or a type of solar panels for the solar field system that optimizes the operation of the site). In other words, the design method may comprise an automatic selection of an optimal configuration for the solar field system, to balance optimally CO2 savings and the net technical cost.

The performance assessing method is now further discussed.

The performance assessing method is a method for assessing the performance of a site comprising a solar field system. The site may be an industrial site or an individual property. The performance assessing method outputs a quantification of a carbon footprint of the site, and/or a number and/or type of panels to meet the heating requirement, based on inputs related to the site. The quantification of the carbon footprint may include one or several values or quantity each quantifying the carbon footprint, as further discussed hereinafter.

The performance assessing method comprises the provision of a heating requirement for the solar field system. The heating requirement corresponds to the heating demand required to operate the site, or a portion thereof. For example, the heating requirement may correspond to a power (e.g., expressed in watts) and may correspond to the power required hour per hour by the site (e.g., an average value per hour). The provision of the heating requirement may comprise selecting a value of the heating requirement. The selection of the heating requirement may be performed upon user interaction. For instance, the user (e.g., an owner of the site, an engineer, or a designer) may enter the value of the heating requirement, e.g., based on a graphical user interaction (e.g., by entering the heating requirement with a keyboard) on a dedicated portion of a graphical user interface of a computer carrying out the performance assessing method. Alternatively, the selection of the heating requirement may be performed automatically. For instance, the selection may comprise collecting data representing the power required by the site and automatically determining the heating requirement of the site based on the collected data.

The performance assessing method comprises the provision of one or more set of inputs. For each set of inputs, the provision may comprise retrieving at least a part (e.g., all) of the inputs from a (e.g., distant) memory or database were said at least a part is stored. Additionally or alternatively, the performance assessing method may comprise forming at least a part (e.g., all) of the inputs, for example by measuring them and/or processing existing data (e.g., including measurements).

The provision of the one or more sets of inputs may be partially automated. For instance, the provision may comprise selecting a solar panel technology from a set of solar panel technologies. The set of solar panel technologies may include at least one fixed panel technology and/or at least one panel technology based on a tracking system. The provision may comprise selecting one or more manufacturers of the selected solar panel technology (e.g., one manufacturer for each set). Then, the provision of the one or more sets of inputs may comprise automatically importing from a database the panel features according to the selected one or more manufacturers.

The provision is performed for one or more sets of inputs, e.g., several sets of inputs. A single set of inputs is now discussed, but this discussion applies equally to any set of the one or more sets of inputs.

The set of inputs includes meteorological data. The meteorological data are data representing weather conditions at the site. The meteorological data may include indicators of solar radiation strength. For instance, the meteorological data may include irradiance indicators, such as a global horizontal irradiance and a diffuse horizontal irradiance. The meteorological data may also include data representing the relative position of the sun at the site, such as a sun azimuth and a sun zenith. The meteorological data may also include temperature data of the site, e.g., an ambient temperature. The meteorological data may be provided as average values (e.g., annual, monthly, daily, or hourly values). The meteorological data may be specified by the user, for example hour by hour over a full year (i.e., eight thousand seven hundred and sixty hours in total).

The set of inputs includes panel features for one or more solar panel types. The set of inputs may include panel features of any type of solar panel. For instance, the one or more solar panel types may include standard solar panels, evacuated tubes solar panels, evacuated planer thermal solar panels, and hybrid panels that include both Photo Voltaic (PV) panels and thermal panels. The set of inputs may include panel features for each of the one or more solar panel types (e.g., the same panel features for each solar panel type, or one or more panel features that are specific to one or more given solar panel type). The panel features may include fluid features, such as a heat capacity (Cp), a density (p) and/or a viscosity ($\mu$). The panel features may include size parameters of the solar panel type, such as an aperture area, a length and/or a width. The panel features may include an equation to predict performance of a panel, e.g., an equation given in a certification. For instance, the equation may be the Solar Keymark equation. In that case, the panel features may include coefficients of the Solar Keymark equation, such as a peak collector efficiency based on direct irradiance ($\eta_0$), an incidence angle factor for diffuse irradiance ($K_d$), an angle of incidence factor of the collector ($K_b$), a heat loss coefficient ($a_1$), an effect of temperature on the heat loss coefficient ($a_2$), an effect of wind on the heat loss coefficient ($a_3$), an effect of sky temperature on the heat loss coefficient ($a_4$), an effective heat capacity ($a_5$), an effect of wind on optical performance ($a_6$), an effect of wind on infrared radiation exchange ($a_7$) and/or a radiation loss ($a_8$). The panel features may include string parameters, such as a minimum allowable flow rate in a string and/or a maximum allowable flow rate in a string. The panel features may include piping parameters, such as a piping internal diameter of panel, a number of piping elbows of panel and/or a piping roughness of panel.

The set of inputs includes site data. The site data may represent the operation of the site. The site data may include operating temperature data, such as a solar field inlet temperature and/or a solar field outlet temperature. The site data may include features of the solar field system, such as a solar multiple, a panel inclination, a panel azimuth, a number of modules of the solar field and/or a ratio taking into account the space between strings. The site data may include data representing an operating condition of the site, such as a power discount factor and/or a regulation mode.

The set of inputs may optionally include one or more other types of data. For instance, the set of inputs may include thermal storage data (e.g., a storage duration and/or a thermal storage pressure drop). The set of inputs may include piping data (e.g., a piping material roughness and/or a fluid maximum velocity in piping). The set of inputs may include fired heater data (e.g., a fired heater efficiency, a natural gas LHV, a natural gas CO2 emission factor and/or a fired heater pressure drop). The set of inputs may include financial data, such as solar field costs per panel (e.g., panel, balance of system, monitoring & control system and/or manpower), a thermal storage tank cost, a system lifetime, an electricity cost (for pump), a gas cost (boiler for power complement), a CO2 tax, an interest rate (if bank loan), an imposition rate, a discount rate, an inflation rate, a part of investment on own funds, a bank loan duration, an annual production loss. The set of inputs may include circulation pump data (e.g., a pump efficiency and/or a margin on consumption).

For each set of inputs, further to the provision of the set of inputs, the performance assessing method computes, based on the set of inputs, a quantification of the carbon footprint of the site, and/or a number and/or type of panels to meet the heating requirement. The computation is carried out automatically by a computer system executing the performance assessing method. For example, a user may launch the computation, e.g., by a graphical user interaction (e.g., a click) on a dedicated portion of a graphical user interface of the computer system, and then the computer system performs the computation. The performance assessing method may for example comprise displaying the output(s), e.g., in one or more tables.

The output data may include, for each set of inputs, a respective quantification of a carbon footprint of the site for each set of inputs. The quantification of the carbon footprint comprises data quantifying the carbon footprint of the site for the provided set of inputs, i.e., in the configuration of the site that corresponds to the provided set of inputs. The quantification of the carbon footprint may include a quantification of avoided CO2 emissions. The avoided CO2 emissions may correspond to an estimated amount of CO2 emissions that the solar field system avoids (i.e., that would be emitted from the site if the solar field system was not providing heat to the site).

The output data may also include, for each set of inputs, a number and/or type of panels to meet the heating requirement. The number of panels is the number (i.e., quantity/count) of panels that the solar field system includes. The type of panels is the type of the panels that the solar field system includes (i.e., among a predetermined set of panel types, e.g., based on different panel technologies, and/or functioning and/or dimensioning panel parameters). In a first example, the output data may include only the number of panels for each set of inputs. For instance, each provided set of inputs may include a respective type of panel (e.g., a type of panel selected by the user) and the performance assessing method may compute the number of panels according to this provided respective type. In second example, the output data may include only the type of panels for each set of inputs. For instance, the provided set of inputs may include a requirement regarding the number of panels (such as a maximum number of panels or a maximum panel surface) and the performance assessing method may compute the number of panels according to this provided requirement. In a third example, the output data may include both a number and a type of panels for each set of inputs. For instance, the performance assessing method may automatically select one type of solar panel (e.g., among the one or more solar panel types for which panel features are provided) and compute the number of panels corresponding to this selected type. The automatic selection of one type may be based on specificities of the site (e.g., considerations on the site with respect to the provided site data), or on other considerations such as user's preferences, supply, or lead time.

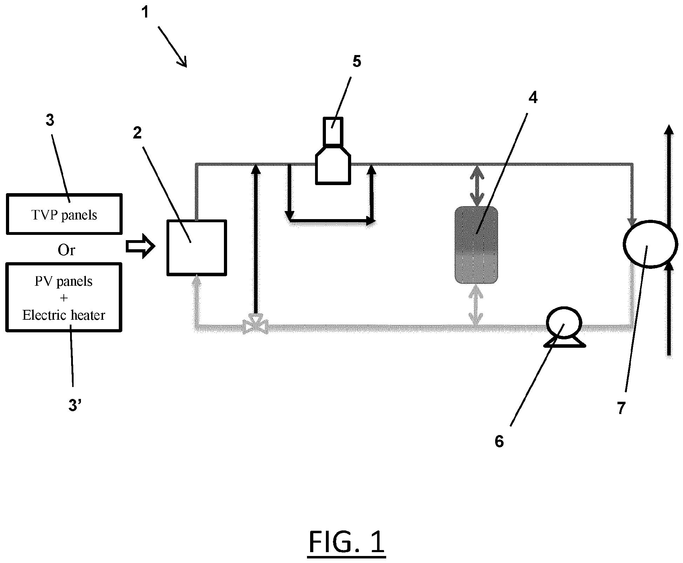

FIG. 1 shows an example of a site 1 comprising a solar field system 2. The solar field system 2 includes solar panels and is configured for providing heat. FIG. 1 shows two embodiments for the solar field system regarding the solar panel type. In a first embodiment 3, the solar field system comprises evacuated planer thermal solar panels. In a second embodiment 3', the solar field system comprises Photo Voltaic (PV) panels and an electric heater. In other embodiments, the solar field system may comprise any other type of panel (or any combination thereof). The site 1 further comprises a thermal storage 4 configured to store the heat provided by the solar field system, e.g., when the heat produced by the solar field system exceeds that required by the site. The site 1 further comprises a gas heater 5 configured to provide heat, e.g., when the heat produced by the solar field system is less than that required by the site. The site 1 further comprises a circulation pump 6 and a process heat exchanger 7. The process heat exchanger 7 is configured to exchange the heat provided by the solar field system 2 or the gas heater 5 or recovered from the thermal storage 4 with the rest of the site (i.e., with one or more other installations of the site such as a heating system).

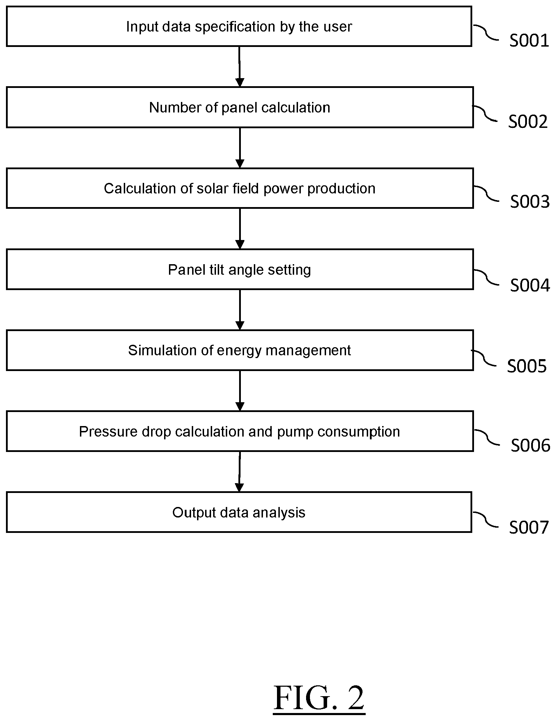

FIG. 2 shows an example of a flowchart of the performance assessing method. The performance assessing method comprises providing S001 specification data (e.g., by a user). The specification data comprise a heating requirement for the solar field system and one or more sets of inputs. Each set of inputs includes meteorological data, panel features for one or more solar panel types and site data. The performance assessing method then comprises computing output data. The computation of the output data comprises calculating S002 the number of panels of the solar field system. The computation of the output data comprises calculating S003 a solar field power production over a period. The computation of the output data comprises setting S004 a panel tilt angle. The computation of the output data comprises simulating S005 an energy management of the solar field system, the thermal storage, and the gas heater. The computation of the output data further comprises calculating S006 a pressure drop in the solar field system and a power consumption of the circulation pump. The pressure drop may comprise a main distributor pressure drop, a module pressure drop and a main collector pressure drop. The calculation of the power consumption of the circulation pump may be based on the calculated pressure drop in the solar field system (e.g., the pressure drop may be calculated prior to the calculation of the power consumption). After the computation of the output data, the performance assessing method comprises analyzing S007 the computed output data (e.g., including displaying the computed respective quantification of the carbon footprint of the site, and/or the number and/or type of panels to meet the heating requirement for each set in one or more tables).

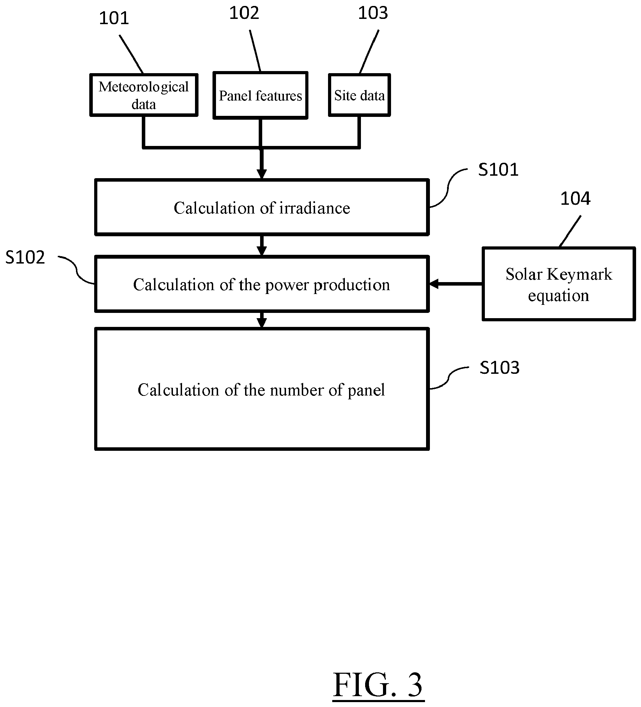

FIG. 3 shows an example of the calculation S002 of the number of panels of the solar field system. The calculation S002 of the number of panels takes as inputs the meteorological data 101, the panel features 102 and the site data 103. The calculation S002 of the number of panels comprises calculating S101 a solar irradiance at the site. The solar irradiance corresponds to a measure of the power of electromagnetic radiation delivered by the sun per unit area. The solar irradiance may be calculated for a specific day of the year, e.g., the sunnier day of the year or another chosen day. The solar irradiance may be expressed by a single variable such as a global irradiance or by several variables such as a direct irradiance on tilted surface ($G_{b,T}$) and a diffuse irradiance on tilted surface ($G_{d,T}$).

The calculation S002 of the number of panels further comprises calculating S102 a power production. The calculation S102 of the power production takes as input the calculated solar irradiance and a Solar Keymark equation 104. The Solar Keymark equation 104 is as known an equation which provides an estimation of the power production of one panel based on the solar irradiance. In this example, each of the solar panels is of the same type. Thus, the same Solar Keymark equation 104 may be used for estimating the power production of each panel. In other examples, the solar field system may comprise panels of several types, and in that case a different Solar Keymark equation may be used for each type. In this example, the Solar Keymark equation 104 is formulated as:

$$P_{nom\,panel} = A_g \cdot (\eta_0 \cdot K_{\theta,b} \cdot G_{b,T} + \eta_0 \cdot K_d \cdot G_{d,T} - a_1(T_m - T_a) - a_2(T_m - T_a)^2)$$

wherein $P_{nom\,panel}$ is the thermal power absorbed by the panel, $A_g$ is the area of the panel, $\eta_0$ is the peak collector efficiency based on direct irradiance, $K_d$ is the incidence angle factor for diffuse irradiance, $K_{\theta,b}$ is the incidence angle modifier for beam irradiance, $a_1$ is the heat loss coefficient, $a_2$ is the effect of temperature on the heat loss coefficient, $T_m$ is the mean temperature of the fluid and $T_a$ is the ambient temperature.

The mean temperature may be computed based on the following formula:

$$T_m = \frac{T_{inlet} + T_{outlet}}{2}$$

wherein $T_{inlet}$ is the inlet temperature and $T_{outlet}$ is the outlet temperature. In other examples, the Solar Keymark equation 104 may be formulated as:

$$P_{nom\,panel} = A_g \cdot (a_0 \cdot G - a_1(T_m - T_a) - a_2(T_m - T_a)^2)$$

wherein $a_0$ is an optical efficiency and is a $G$ the global irradiance.

The calculation of the power production may be certified, e.g., based on the Solar Keymark certification. The calculation S002 of the number of panels may comprise calculating the power production according to a norm (e.g., an ISO norm such as the ISO9806).

The calculation S002 of the number of panels further comprises calculating S103 the number of panels based on the calculated power production of one panel. For instance, the number of panels may be calculated with the following formula:

$$N_{panels} = \frac{P_{req;cons}}{P_{nom\,panel} \times DF} \times SM$$

wherein $N_{panels}$ is the number of panels, $P_{req;cons}$ is the heating requirement, $DF$ is a discount factor and SM is a solar multiple.

The discount factor $DF$ may be 0.85 for the type of panel "evacuated planer thermal solar panel". The performance assessing method may comprise determining the discount factor, e.g., a positive number lower than 1. For instance, the determination of the discount factor may be based on a comparison study between calculated and experimental data. The solar multiple SM corresponds to the oversizing of the solar field in relation to the load. The solar multiple SM allows filling the thermal storage with the excess energy produced.

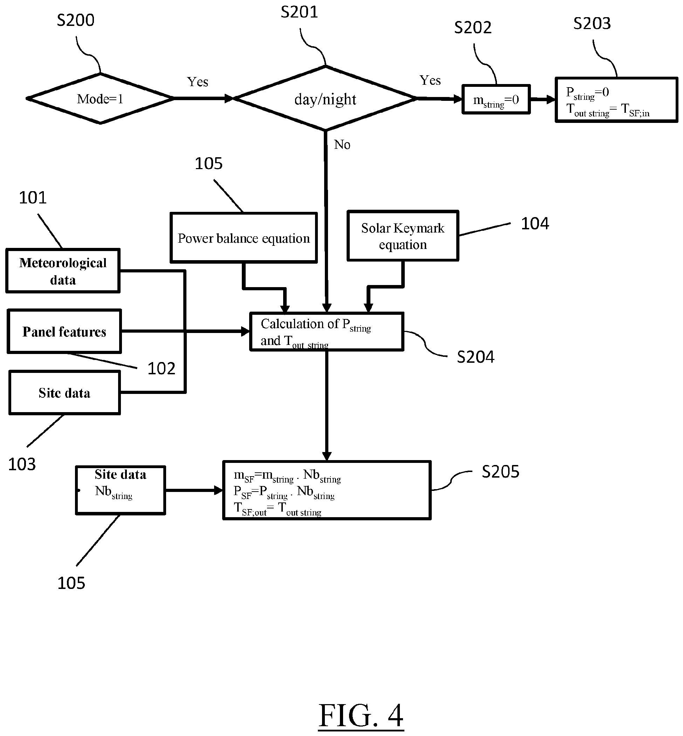

FIG. 4 shows a first example of the calculation S003 of the solar field power production in a constant solar field flow rate regulation mode. The calculation S003 of the solar field power production over the period comprises discretizing the period into a set of time intervals. For instance, the period may be a day or a year, and the discretization may consist in segmenting the day or year into a set of time intervals each representing a respective hour of the day or year (or a respective day of the year). Then, for each time interval, the calculation S003 of the solar field power production comprises calculating a power production of the solar field system and an outlet temperature of the solar field system based on the solar Keymark equation, the calculated number of panels and a solar field flow rate (i.e., the flow rate in the solar field system). For instance, the flow rate may be included in the site data. The calculation S003 calculates the power production and the outlet temperature of the solar field system for each time interval. The number of panels may be fixed for each time interval and may for example correspond to the number of panels computed in step S002.

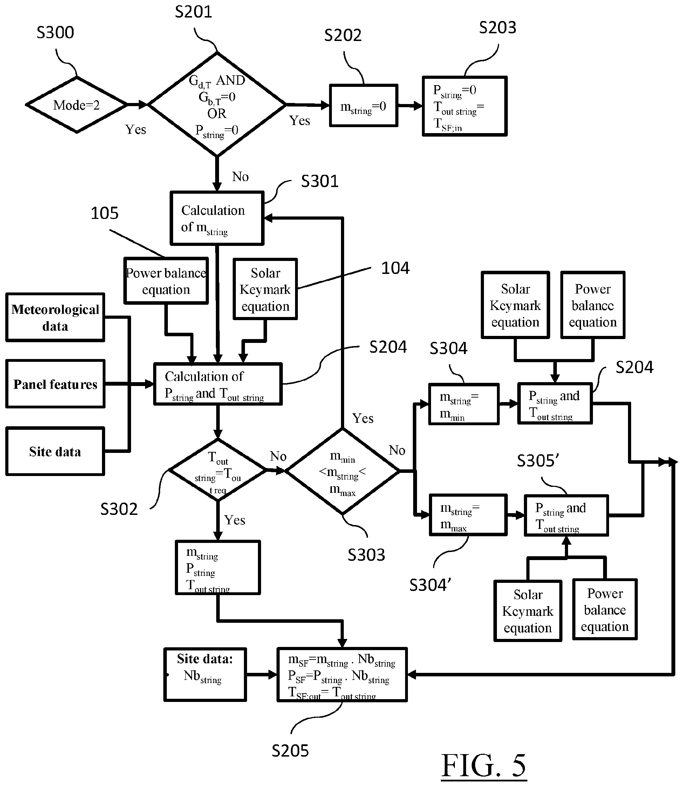

In this first example, the regulation mode is a constant solar field flow rate mode, which means that the flow rate of the fluid in the solar field system is constant. The performance assessing method may perform this first example of the calculation S003 of the solar field power production for each set of input having the constant flow rate regulation mode specified in the site data. For instance, the performance assessing method may comprise, for each set of inputs, determining the regulation mode specified in the site data, and, if the regulation mode is the constant flow rate mode, performing this first example. The calculation S003 of the solar field power production comprises determining S200 that the regulation mode is the constant flow rate mode (referred to as "mode 1" in this example). For another set of input, if the regulation mode is not the constant flow rate mode, another example of the calculation S003 of the solar field power production may be performed (e.g., as in the second example that is discussed below with reference to FIG. 5).

For each time interval, the calculation S003 comprises determining S201 if the time interval is during the day or night. The determination S201 may be based on the solar irradiance data (e.g., the direct irradiance on tilted surface $G_{b,T}$ and the diffuse irradiance on tilted surface $G_{d,T}$). For example, the determination S201 may determine that the time interval is during the night if the $G_{b,T}$ is zero and the $G_{d,T}$ is zero. Otherwise, if at least one of the $G_{b,T}$ and the $G_{d,T}$ is not zero, the determination S201 may determine that the time interval is during the day.

If the time interval is during the night ("Yes" in step S201), the calculation comprises determining S202 that the string flow rate is zero. The calculation thus determines S203 that the string power production is equal to zero (i.e., that the power production is also equal to zero) and the outlet temperature of the solar field system is equal to the inlet temperature of the solar field system.

If the time interval is not during the night ("No" in step S201), the calculation comprises calculating S204 the string power production and the string outlet temperature. The calculation S204 of the string power production and the string outlet temperature takes as inputs the provided meteorological data 101, the panel features 102 and the site data 103. The calculation S204 of the string power production and the string outlet temperature is based on the Solar Keymark equation 104 and a power balance equation 105. The power balance equation 105 may be expressed by the following formula:

$$P_{half-panel} = m_{half-panel} * C_p * \left(T_{out\,half-panel} - T_{in\,half-panel}\right)$$

wherein $P_{half\text{-}panel}$ (W) is a power of a half-panel, $m_{half\text{-}panel}$ (kg/s) is a flow rate of a half-panel, $C_p$ (J/kg/°C) is a fluid heat capacity, $T_{out\ half\text{-}panel}$ (°C) is a half-panel outlet temperature and $T_{in\ half\text{-}panel}$ (°C) is a half-panel inlet temperature.

Then, the calculation comprises calculating S205 the flow rate, the power production and the outlet temperature of the solar field system based on the calculated string power production and string outlet temperature. The calculation S205 of the flow rate, the power production and the outlet temperature of the solarfield system takes as inputs site data, including the number of strings 105. The calculation S205 of the flow rate $m_{SF}$, the power production $P_{SF}$ and the outlet temperature $T_{SF;out}$ of the solar field system may be based on the following formulas:

$$m_{SF} = m_{string} . Nb_{string}$$

$$P_{SF} = P_{string} . Nb_{string}$$

$$T_{SF;out} = T_{out;string}$$

wherein $P_{string}$ is the calculated string power production, $T_{out;string}$ is the string outlet temperature, $m_{string}$ is the string flow rate and $Nb_{string}$ is the number of strings. In this first example, the flow rate of the fluid in the solar field system is imposed and constant, and the string flow rate $m_{string}$ is also constant. The string flow rate $m_{string}$ may be deduced from the imposed constant flow rate. The number of strings may be computed based on the number of panels (e.g., the number of panels computed in step S002).

FIG. 5 shows a second example of the calculation S003 of the solar field power production in a constant temperature regulation mode. As for the first example, the calculation S003 of the solar field power production over the period comprises discretizing the period into a set of time intervals, and, then, for each time interval, calculating a power production of the solar field system and an outlet temperature of the solar field system based on the solar Keymark equation, the calculated number of panels and a flow rate. In the second example, the regulation mode of the site is a constant outlet temperature mode. The calculation S003 of the solar field power production further comprises, for each time interval of the set, correcting the flow rate such that the calculated outlet temperature provided by the solar field system corresponds to the constant outlet temperature.

The correction of the flow rate is now discussed in more details. The calculation S003 of the solar field power production starts in the same way as in the first example. The calculation S003 comprises determining S300 that the regulation mode is the constant outlet temperature mode (referred to as "mode 2" in this example), and then, for each time interval, calculation S003 comprises determining S201 if the time interval is during the day or night. For instance, the determination S201 may be based on the direct irradiance on tilted surface ($G_{b,T}$), the diffuse irradiance on tilted surface ($G_{d,T}$). Alternatively or additionally, the determination S201 may be based on the string power production ($P_{string}$). For example, the determination S201 may determine that the time interval is during the night if the $G_{b,T}$ is zero and the $G_{d,T}$ is zero, or if the $P_{string}$ is zero. Otherwise, the determination S201 may determine that the time interval is during the day. If the time interval is during the night ("Yes" in step S201), the calculation S003 comprises determining S202 that the string flow rate is zero. The calculation thus determines S203 that the string power production is equal to zero (i.e., that the power production is also equal to zero) and the outlet temperature of the solar field system is equal to the inlet temperature of the solar field system.

If the time interval is not during the night ("No" in step S201), the calculation S003 iteratively determines the string flow rate such that the string outlet temperature corresponds to the constant outlet temperature of the regulation mode. The iteratively determination of the string flow rate consists in, for each iteration, setting S301 a new string flow rate, computing S204 the string power production and the string outlet temperature as in the first example, and, determining S302 if the string outlet temperature corresponds to the constant outlet temperature of the regulation mode. If the string outlet temperature corresponds to the constant outlet temperature of the regulation mode, the calculation S003 calculates S205 the flow rate, the power production and the outlet temperature of the solar field system based on the calculated string power production and string outlet temperature as in the first example. If not, the calculation S003 starts a new iteration and sets S301 a new string flow rate and performs again the calculation S204 and the determination S302 with the new string flow rate. By iteratively performing these steps, the calculation S003 iteratively determines the string flow rate such that the string outlet temperature corresponds to the constant outlet temperature of the regulation mode. At the end of an iteration, the calculation S003 may comprise a step of determining S303 if the string flow rate is lower than a minimum flow rate value $m_{min}$ and higher than a maximum flow rate value $m_{max}$. If not, and if the string flow rate is lower than a minimum flow rate value $m_{min}$, the calculation S003 may comprise determining S304 that the string flow rate is minimum and computing S204 the string power production and the string outlet temperature based on this minimum flow rate value $m_{min}$. In a similar way, if not, if the string flow rate is higher than a maximum flow rate

value $m_{max}$, the calculation S003 may comprise determining S304' that the string flow rate is maximum and computing S305' the string power production and the string outlet temperature based on this maximum flow rate value $m_{max}$. At this time, the calculation S003 may calculate S205 the flow rate, the power production and the outlet temperature of the solar field system as previously discussed.

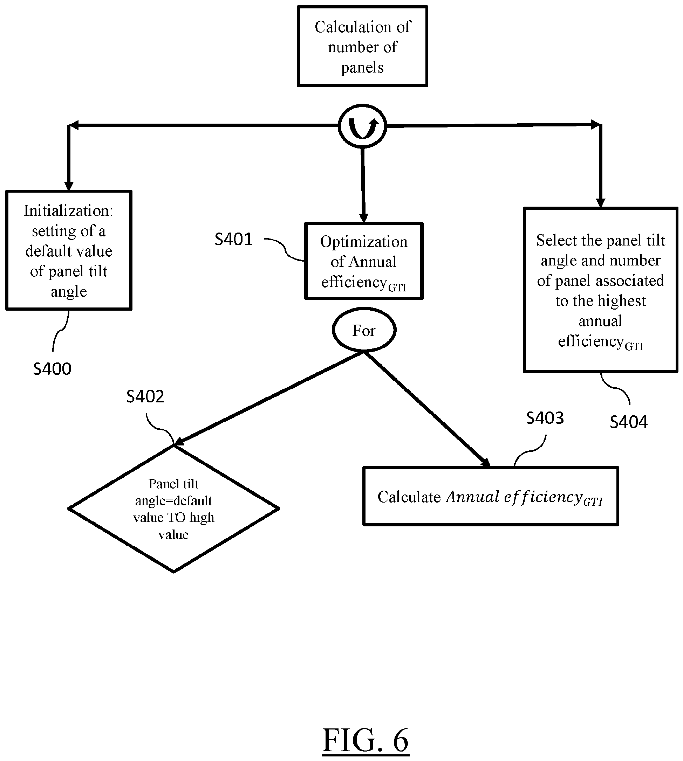

FIG. 6 shows an example of the setting S004 of the panel tilt angle. In this example, the setting S004 of the panel tilt angle is performed iteratively. In a first step S400, the panel tilt angle is set based on a default value of panel tilt angle. In a second step, the setting S004 comprises optimizing S401 an annual efficiency. The optimization S401 may comprise iteratively increasing the panel tilt angle from the default value to a high value, and for each iteration, computing the annual efficiency for the panel tilt angle of the iteration. The annual efficiency may be computed based on the formula:

$$Annual\ efficiency_{GTI} = \frac{Annual\ cumulative\ production}{Annual\ cumulative\ GTI}$$

wherein the *Annual cumulative production* is the power produced by the solar field over a year and the *Annual cumulative GTI* (Global Tilted Irradiance) is the global solar irradiance on the tilted surface of the panels received over a year.

For each iteration, the computing the annual efficiency may comprise the calculation of the number of panels of the solar field system previously discussed in reference to FIG. 3. After each of the iterations, the setting S004 comprises selecting S404 the panel tilt angle associated with the highest annual efficiency based on the results of the optimization S401. At the same time, the calculated number of panels associated to the highest annual efficiency may also be selected.

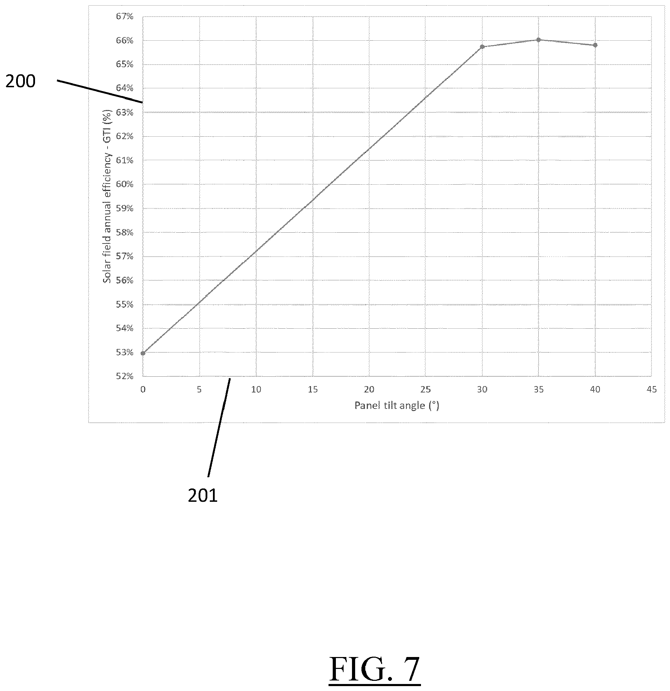

FIG. 7 shows an example of the optimization S401 of the annual efficiency, e.g., as previously discussed with reference to FIG. 6. The optimization S401 of the annual efficiency may comprise displaying a graph representing the computed annual efficiency as a function of the panel tilt angle. This graph comprises one point for each iteration of the optimization S401. Then, the optimization S401 may comprise selecting the panel tilt angle value maximizing the annual efficiency (35° for this example).

With reference to FIG.s 8, 9 and 10, the simulation S005 of the energy management is now discussed. The simulation S005 of the energy management may comprise discretizing the period in time intervals and, for each time interval, simulating the energy management of the system, as in the calculation S003 of the solar field power production over the period. The discretization may, e.g., be the same as in step of calculating S003 the solar field power production.

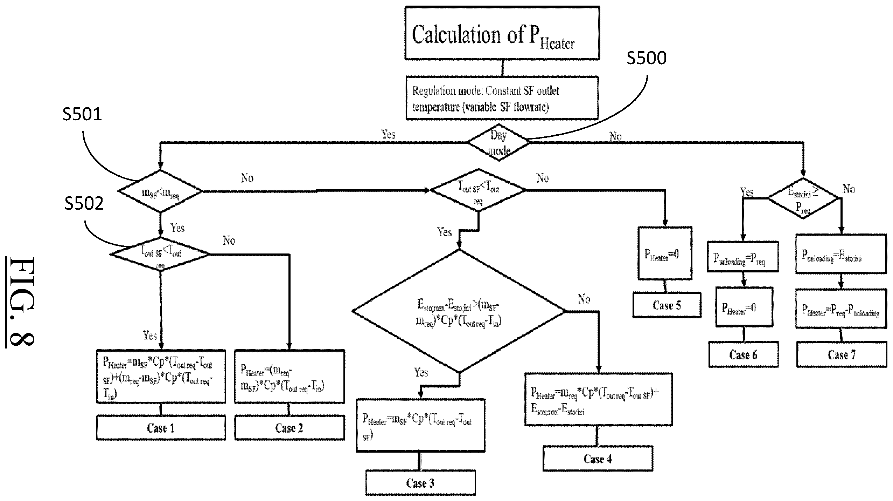

The simulation S005 of the energy management may comprise determining a thermal power of the gas heater based on the flow rate and the calculated outlet temperature. The determination of the thermal power of the gas heater is based on two steps that are repeated for each time interval. In a first step, the determination of the thermal power of the gas heater determines in which case (among "case 1", "case 2", "case 3", "case 4", "case 5" and "case 6") the operation of the site is based on the solar field flow rate $m_{SF}$, the solar field outlet temperature $T_{out\ SF}$ and an initial storage capacity of the thermal storage $E_{sto;ini}$ and/or a remaining storage capacity of the thermal storage $E_{sto;max}-E_{sto;ini}$. Then, the determination of the thermal power of the gas heater calculates the thermal power of the heater for the time interval based on the determined case by applying a formula that depends on the case. The determination in which case the operation of the site may be based on a decision tree, such as the one illustrated in FIG. 8. In this decision tree, for being in the "case 1", the time interval is during the day ("Yes" in S500, condition "Day mode"), the solar field flow rate is higher than the required flow rate ("Yes" in S501, condition "$m_{SF}<m_{req}$"), the solar field outlet temperature is higher than required outlet temperature ("Yes" in S502, condition "$T_{out\ SF}<T_{out\ req}$").

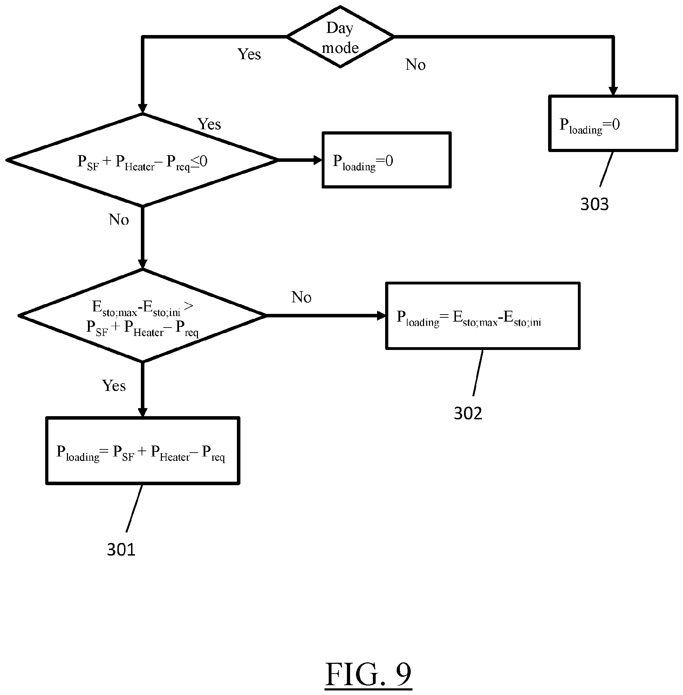

The simulation S005 of the energy management may comprise determining a power loading of the thermal storage based on the required thermal power, the calculated solar field power production, the determined thermal power of the gas heater and a remaining thermal storage. As for the determination of the thermal power of the gas heater, the determination of the power loading of the thermal storage is based on two steps that are repeated for each time interval. In a first step, it is determined in which of several cases the operation of the site is, and in a second step, the power loading of the thermal storage is calculated based on a formula that depends on the case. For instance, the determination may be the decision tree illustrated in FIG. 9, which comprises three cases (301, 302 or 303) and respective formula for each case.

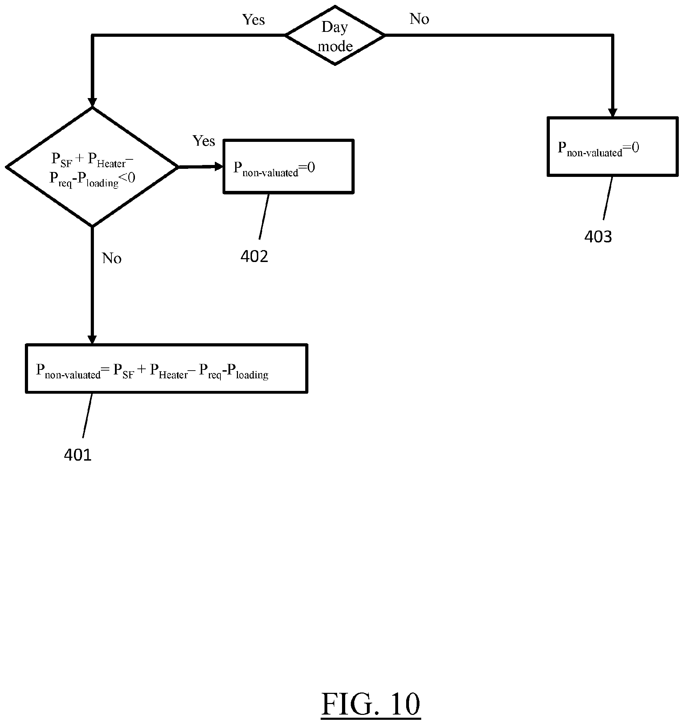

The simulation S005 of the energy management may comprise determining a non-valuated energy (curtailment). As for the determination of the thermal power of the gas heater and of the power loading of the thermal storage, the determination of the non-valuated energy is based on two steps that are repeated for each time interval. In a first step, it is determined in which of several cases the operation of the site is, and in a second step, the power loading of the thermal storage is calculated based on a formula that depends on the case. For instance, the determination may be based on the decision tree illustrated in FIG. 10, which comprises three cases (401, 402 or 403) and a respective formula for each case. The determination of the non-valuated energy may be based on a power balance equation, which be expressed by the following formula:

$$P_{SF} + P_{heater} + P_{unloading} - P_{req} - P_{loading} - P_{non-valuated} = 0$$

wherein $P_{SF}$ is the power production of the solar field system, $P_{heater}$ is the power generated by the heater, $P_{req}$ is the heating requirement, $P_{loading}$ is the power loading of the storage heater, $P_{unloading}$ is the power unloading of the storage heater and $P_{non-valuated}$ is the non-valuated energy. The power unloading of the storage heater $P_{unloading}$ may be considered zero for the determination of the non-valuated energy.

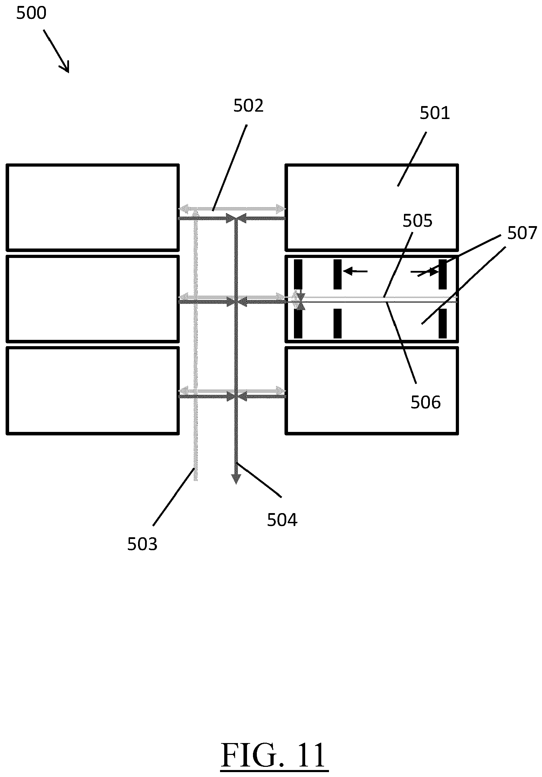

FIG. 11 shows an example of the solar field system. The solar field system 500 comprises several modules 501 connected via a fluid distribution network 502. The fluid distribution network 502 comprises a first main collector 503 for cold fluid and a second main collector 504 for hot fluid. Each module comprises a module distributor 505 connected to the first main collector 503, a module collector 506 connected to the second main collector 504 and two strings 507 that are each connected to the module distributor 505 and the module collector 506. Each string comprises panels (e.g., between two and twenty panels, for example ten panels) connected in series with the module distributor 505 and the module collector 506. The number of panels per string may be determined based on calculations of pressure drops and/or the temperature and flow rate requested by the user. In other examples of solar field system, the number of strings per module may be different (e.g., higher than two).

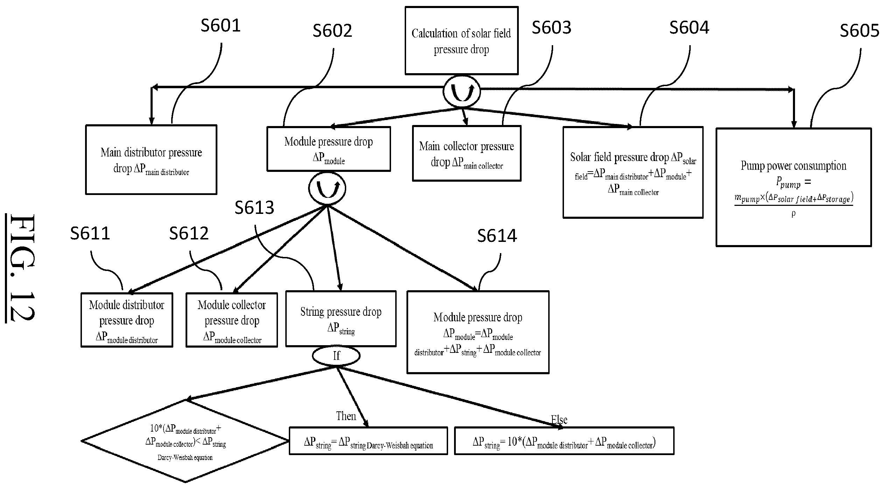

FIG. 12 shows an example of calculation of the pressure drop in the solar field system and of calculation of the power consumption of the circulation pump. The calculation of the pressure drop in the solar field system comprises calculating S601 a main distributor pressure drop, calculating S602 a module pressure drop, calculating S603 a main collector pressure drop and deducing S604 the pressure drop by adding the calculated main distributor pressure drop, module pressure drop and main collector pressure drop. The calculation S602 of the module pressure drop may comprise calculating S611 a module distributor pressure drop, calculating S612 a module collector pressure drop, calculating S613 a string pressure drop and deducing S614 the module pressure drop by adding the calculated module distributor pressure drop, module collector pressure drop and string pressure drop. The calculation S6013 of the string pressure drop may be based on the Darcy-Weisbach equation, which may be expressed as:

$$\Delta P\ section(Pa) = \frac{1}{2} \times fd \times \rho \times v^2 \times \frac{L\ section}{Di}$$

wherein $\Delta P$ section is the pressure drop through straight tube, fd is the friction factor, p is the fluid density, v is the fluid velocity in tube, $L_{section}$ is the tube length, Di is the tube internal diameter.

The friction factor fd may be computed using the following formulas:

$$fd = 8 \times [(\frac{8}{RE})^{12} + \frac{1}{(A+B)^{1.5}}]^{\frac{1}{12}}$$

$$A = [2.457 \times \ln\left(\frac{1}{\left(\frac{7}{RE}\right)^{0.9} + 0.27 \times \frac{\varepsilon}{Di}}\right)]^{16}$$

$$B = (\frac{3750}{RE})^{16}$$

wherein Re is the Renolds number and $\varepsilon$ is the tube roughness.

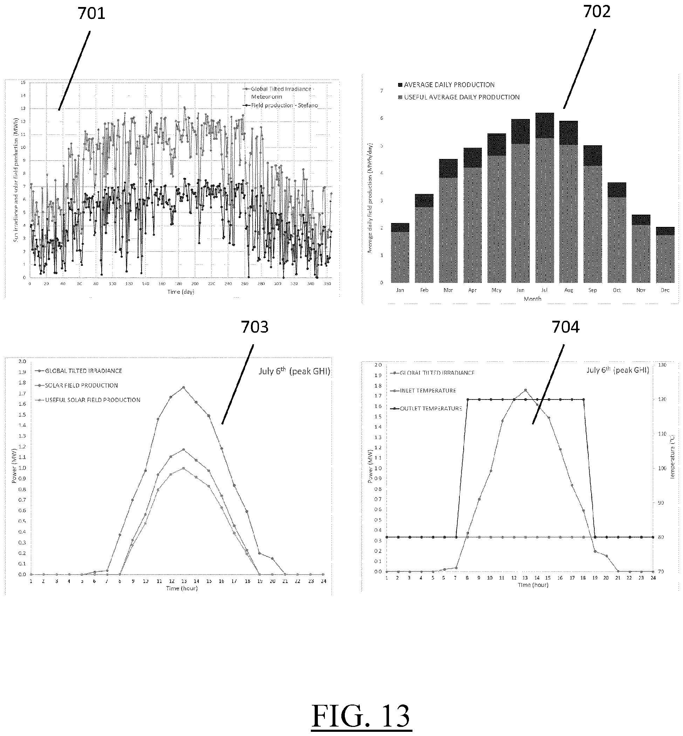

The output data are now discussed with reference to FIG.s 13 and 14. The performance assessing method may comprise displaying the output data. The performance assessing method may plot the output data in a graph. For instance, the graph may represent one or several of a Global Tilted Irradiance (W), a Solar field production (W) and Solar field outlet temperature as a function of time (e.g., the computed values for each time interval). FIG. 13 shows four examples 701, 702, 703 and 704 of graphs that may be displayed by the method.

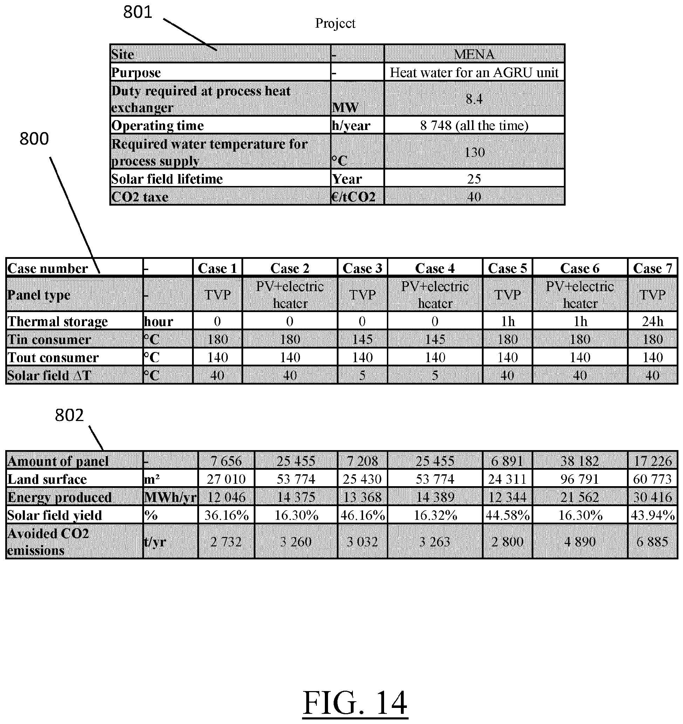

Alternatively or additionally, the performance assessing method may represent the output data in a table. For instance, the table comprises one or more rows representing each a respective set of the one or more sets of inputs and one or more lines representing each a respective output data. FIG. 14 shows an example of sets of input and computed output data. In this example, seven sets of inputs are provided. Each set of inputs is represented in a first table 800. Each set corresponds to one of the seven cases ("case 1", "case 2", etc.). In this example, a same site is considered for each case. The site data (indicated in a second table 801) are thus the same of each set. Each set is specified by a panel type, a thermal storage, an inlet temperature, an outlet temperature, and a solar field variation of temperature. The output data computed for each set are displayed in a table 802. The table 802 indicates technical output data, which include an amount of panel, a land surface, an energy produced, a solar field yield and avoided $CO_2$ emissions.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

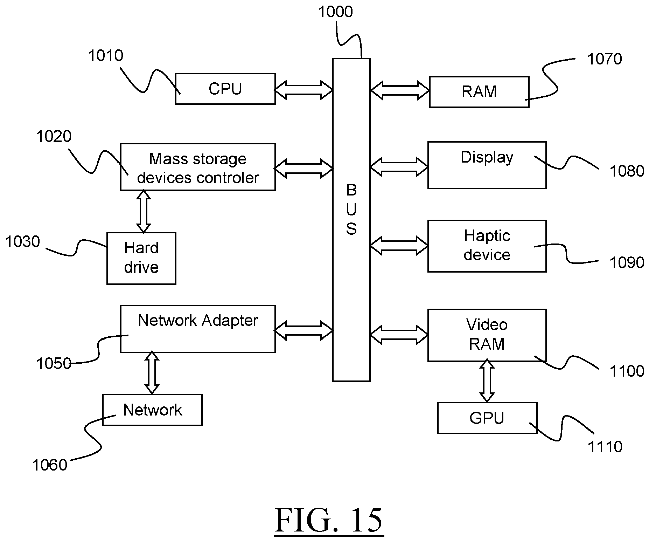

FIG. 15 shows an example of the system, wherein the system is a client computer system, e.g., a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard, or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method for assessing performance of a site comprising a solar field system which includes solar panels and is configured for providing heat, the method comprising:

- providing a heating requirement for the solar field system;
- providing one or more sets of inputs, each set of inputs including:

  o meteorological data,
  o panel features for one or more solar panel types, and
  o site data; and

- computing automatically, for each set of inputs, by a computer system and based on the set of inputs, output data including a respective quantification of a carbon footprint of the site, and/or a number and/or type of panels to meet the heating requirement.

2. The method of claim 1, wherein the site further comprises a thermal storage and a gas heater, the computation of the output data comprising:

  - calculating the number of panels of the solar field system;
  - calculating a solar field power production over a period; and
  - simulating an energy management of the solar field system, the thermal storage and the gas heater.

3. The method of claim 2, wherein the panel features include a solar Keymark equation, the calculation of the number of panels comprising:

  ◦ calculating irradiance data for a day of the year based on the meteorological data;
  ◦ calculating a power production of one panel based on the calculated irradiance data and the solar Keymark equation; and
  ◦ calculating the number of panels based on the power production of one panel and the heating requirement.

4. The method of claim 3, wherein the calculation of the solar field power production over the period comprises:

  - discretizing the period into a set of time intervals; and
  - for each time interval, calculating a power production and an outlet temperature provided by the solar field system based on the solar Keymark equation, the calculated number of panels and a solar field flow rate.

5. The method of claim 4, wherein the solar field power production is configured to provide a constant outlet temperature, the calculation of the solar field power production further comprises, for each time interval of the set:

  - correcting the flow rate such that the calculated outlet temperature provided by the solar field system corresponds to the constant outlet temperature.

6. The method of claim 4 or 5, wherein the simulation of the energy management comprises determining a thermal power of the gas heater based on the solar field flow rate and the calculated outlet temperature.

7. The method of claim 6, wherein the simulation of the energy management comprises determining a power loading of the thermal storage based on the heating requirement, the calculated solar field power production, the determined thermal power of the gas heater and a remaining thermal storage.

8. The method of any one of claims 2 to 7, wherein the computation of the output data further comprises setting a panel tilt angle, the setting of the panel tilt angle comprising:

  - determining a set of panel tilt angles;
  - computing an annual efficiency for each panel tilt angle of the set; and
  - selecting the panel tilt angle of the set that maximizes the computed annual efficiency; and
  - optionally, setting a panel azimuth.

9. The method of any one of claims 1 to 8, wherein the site further comprises a circulation pump, the computation of the output data further comprises:

  - calculating a pressure drop in the solar field system, the pressure drop comprising a main distributor pressure drop, a module pressure drop and a main collector pressure drop;

- calculating a power consumption of the circulation pump based on the calculated pressure drop.

**10.** The method of any one of claims 1 to 9, wherein the provision of the one or more sets of inputs comprises:

- selecting a solar panel technology from a set of solar panel technologies, the set of solar panel technologies optionally including at least one fixed panel technology and/or at least one panel technology based on a tracking system;
- selecting one or more manufacturers of the selected solar panel technology; and
- automatically importing from a database the panel features according to the selected one or more manufacturers.

**11.** A computer implemented method for upgrading a real-world site, the method comprising:

- performing the method of any one of claims 1 to 10, the one or more sets of inputs comprising several sets of inputs, thereby computing respective quantifications of the carbon footprint of the site, and/or numbers and/or types of panels to meet the heating requirement each for a respective set of inputs; and
- determining, based on each computed respective quantification and/or on each number and/or type of panels, one or more solar panels to be integrated on a solar field system of the site and/or an improvement of one or more existing solar panels of the solar field system, wherein optionally the method further comprises, in the real-world site:
- integrating the determined one or more solar panels on the solar field system; and/or
- performing the improvement of the one or more existing solar panels of the solar field system.

**12.** A computer-implemented method for designing a site comprising a solar field system, the method comprising:

- performing the method of any one of claims 1 to 10, thereby computing respective quantifications of the carbon footprint of the site each for a respective set of inputs, and/or numbers and/or types of panels to meet the heating requirement; and
- determining a solar panel technology, a number and/or a type of solar panels for the solar field system based on each computed respective quantification of the carbon footprint and/or on each number and/or type of panels and on a net technical cost.

**13.** A computer program comprising instructions for performing the method of any one of claims 1 to 9 and/or the method of claim 10 and/or the method of any one of claims 11 to 12.

**14.** A device comprising a computer-readable data storage medium having recorded thereon the computer program of claim 13.

**15.** The device of claim 14, wherein the device further comprises a processor coupled to the data storage medium.

FIG. 1

| Input data specification by the user | $\sim$ S001 |
| :---: | :--- |

$\downarrow$

| Number of panel calculation | $\sim$ S002 |
| :---: | :--- |

$\downarrow$

| Calculation of solar field power production | $\sim$ S003 |
| :---: | :--- |

$\downarrow$

| Panel tilt angle setting | $\sim$ S004 |
| :---: | :--- |

$\downarrow$

| Simulation of energy management | $\sim$ S005 |
| :---: | :--- |

$\downarrow$

| Pressure drop calculation and pump consumption | $\sim$ S006 |
| :---: | :--- |

$\downarrow$

| Output data analysis | $\sim$ S007 |
| :---: | :--- |

FIG. 2

101      102      103

| Meteorological data | Panel features | Site data |

Calculation of irradiance    S101

104

S102

Calculation of the power production  ←  Solar Keymark equation

Calculation of the number of panel    S103

FIG. 3

S200  S201  S202  S203

Mode=1 ——Yes——> day/night ——Yes——> $m_{string}=0$ ——> $P_{string}=0$
$T_{out\ string}=T_{SF;in}$

No

105

101

Power balance equation

Solar Keymark equation —— 104

Meteorological data

Panel features ————> Calculation of $P_{string}$ and $T_{out\ string}$ —— S204

102

Site data

103

Site data
$Nb_{string}$ ————> $m_{SF}=m_{string}\cdot Nb_{string}$
$P_{SF}=P_{string}\cdot Nb_{string}$
$T_{SF;out}=T_{out\ string}$ —— S205

105

# FIG. 4

FIG. 5

Calculation of
number of
panels

Initialization:
setting of a
default value
of panel tilt
angle

S400

S401 — Optimization
of Annual
efficiency$_{GTI}$

For

Select the panel tilt
angle and number
of panel associated
to the highest
annual
efficiency$_{GTI}$

S403

S404

S402

Panel tilt
angle=default
value TO high
value

Calculate *Annual efficiency$_{GTI}$*

## FIG. 6

FIG. 7

**Calculation of $P_{Heater}$**

S500

Regulation mode: Constant SF outlet temperature (variable SF flowrate)

Day mode

Yes — No

S501

$m_{SF} < m_{req}$

No → $T_{out\,SF} < T_{out\,req}$

No → $P_{Heater} = 0$

**Case 5**

Yes → $E_{sto;ini} \geq P_{req}$

Yes → $P_{unloading} = P_{req}$ ; $P_{Heater} = 0$

**Case 6**

No → $P_{unloading} = E_{sto;ini}$ ; $P_{Heater} = P_{req} - P_{unloading}$

**Case 7**

S502

Yes → $T_{out\,SF} < T_{out\,req}$

Yes → $P_{Heater} = m_{SF} * Cp * (T_{out\,req} - T_{out\,SF}) + (m_{req} - m_{SF}) * Cp * (T_{out\,req} - T_{in})$

**Case 1**

No → $P_{Heater} = (m_{req} - m_{SF}) * Cp * (T_{out\,req} - T_{in})$

**Case 2**

Yes → $E_{sto;max} - E_{sto;ini} > (m_{SF} - m_{req}) * Cp * (T_{out\,req} - T_{in})$

Yes → $P_{Heater} = m_{SF} * Cp * (T_{out\,req} - T_{out\,SF})$

**Case 3**

No → $P_{Heater} = m_{req} * Cp * (T_{out\,req} - T_{out\,SF}) + E_{sto;max} - E_{sto;ini}$

**Case 4**

**FIG. 8**

EP 4 202 317 A1

23

Day mode

Yes — No

$P_{SF} + P_{Heater} - P_{req} \leq 0$

Yes

$P_{loading} = 0$

$P_{loading} = 0$

303

No

$E_{sto;max} - E_{sto;ini} > P_{SF} + P_{Heater} - P_{req}$

No

$P_{loading} = E_{sto;max} - E_{sto;ini}$

302

Yes

$P_{loading} = P_{SF} + P_{Heater} - P_{req}$

301

FIG. 9

Yes      Day mode      No

$P_{SF} + P_{Heater} - P_{req} - P_{loading} < 0$    Yes    $P_{non\text{-}valuated} = 0$

$P_{non\text{-}valuated} = 0$

403

402

No

$P_{non\text{-}valuated} = P_{SF} + P_{Heater} - P_{req} - P_{loading}$

401

# FIG. 10

FIG. 11

FIG. 12

701

702

703

704

# FIG. 13

801

Project

| Site | - | MENA |
|---|---|---|
| Purpose | - | Heat water for an AGRU unit |
| Duty required at process heat exchanger | MW | 8.4 |
| Operating time | h/year | 8 748 (all the time) |
| Required water temperature for process supply | °C | 130 |
| Solar field lifetime | Year | 25 |
| CO2 taxe | €/tCO2 | 40 |

800

| Case number | - | Case 1 | Case 2 | Case 3 | Case 4 | Case 5 | Case 6 | Case 7 |
|---|---|---|---|---|---|---|---|---|
| Panel type | - | TVP | PV+electric heater | TVP | PV+electric heater | TVP | PV+electric heater | TVP |
| Thermal storage | hour | 0 | 0 | 0 | 0 | 1h | 1h | 24h |
| Tin consumer | °C | 180 | 180 | 145 | 145 | 180 | 180 | 180 |
| Tout consumer | °C | 140 | 140 | 140 | 140 | 140 | 140 | 140 |
| Solar field ΔT | °C | 40 | 40 | 5 | 5 | 40 | 40 | 40 |

802

| Amount of panel | - | 7 656 | 25 455 | 7 208 | 25 455 | 6 891 | 38 182 | 17 226 |
|---|---|---|---|---|---|---|---|---|
| Land surface | m² | 27 010 | 53 774 | 25 430 | 53 774 | 24 311 | 96 791 | 60 773 |
| Energy produced | MWh/yr | 12 046 | 14 375 | 13 368 | 14 389 | 12 344 | 21 562 | 30 416 |
| Solar field yield | % | 36.16% | 16.30% | 46.16% | 16.32% | 44.58% | 16.30% | 43.94% |
| Avoided CO2 emissions | t/yr | 2 732 | 3 260 | 3 032 | 3 263 | 2 800 | 4 890 | 6 885 |

# FIG. 14

1000

1010

CPU

1020

Mass storage
devices controler

1030

Hard
drive

1050

Network Adapter

Network

1060

B
U
S

1070

RAM

Display

1080

Haptic
device

1090

Video
RAM

1100

GPU

1110

# FIG. 15

Europäisches
Patentamt

European
Patent Office

Office européen
des brevets

## EUROPEAN SEARCH REPORT

Application Number

EP 21 30 6871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHRIVASTAVA R L ET AL: "Modeling and simulation of solar water heater: A TRNSYS perspective", RENEWABLE AND SUSTAINABLE ENERGY REVIEWS, vol. 67, 1 January 2017 (2017-01-01), pages 126-143, XP029806832, ISSN: 1364-0321, DOI: 10.1016/J.RSER.2016.09.005 * the whole document * | 1-15 | INV. F24S90/00 |
| X | KLEIN S A ET AL: "Computers in the design of solar energy systems", ENERGY, ELSEVIER, AMSTERDAM, NL, vol. 4, no. 4, 1 August 1979 (1979-08-01), pages 483-501, XP025831997, ISSN: 0360-5442, DOI: 10.1016/0360-5442(79)90078-1 [retrieved on 1979-08-01] * the whole document * | 1-15 | |
| | | | TECHNICAL FIELDS SEARCHED (IPC) F24S |

The present search report has been drawn up for all claims

| Place of search | Date of completion of the search | Examiner |
|---|---|---|
| The Hague | 25 May 2022 | Van Dooren, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)